# EUROPÄISCHE PATENTSCHRIFT

(11) **EP 2 122 206 B1**
(45) Veröffentlichungstag und Bekanntmachung des Hinweises auf die Patenterteilung: **07.11.2012**
(21) Anmeldenummer: 07847629.8
(22) Anmeldetag: 03.12.2007
(51) Int. Cl.: F16H 61/24

(54) **SCHALTVORRICHTUNG FÜR EIN SCHALTGETRIEBE EINES FAHRZEUGES**
SHIFTING DEVICE FOR A MANUAL TRANSMISSION OF A VEHICLE
DISPOSITIF DE CHANGEMENT DE VITESSE POUR UNE BOÎTE DE VITESSES D'UN VÉHICULE

(30) Priorität: 13.12.2006 DE 102006058914
(43) Veröffentlichungstag der Anmeldung: 25.11.2009
(73) Patentinhaber: ZF Friedrichshafen AG, 88038 Friedrichshafen (DE)
(72) Erfinder: EISENBERGER, Dieter, 88693 Deggenhausertal (DE)
(86) Internationale Anmeldenummer: PCT/EP2007/063116
(87) Internationale Veröffentlichungsnummer: WO 2008/071569

(56) Entgegenhaltungen:
- AT-B- 333 602
- DE-A1- 3 704 928
- DE-A1- 10 031 754
- DE-A1- 10 251 351
- DE-A1- 19 960 194
- GB-A- 2 066 909

## Beschreibung

Die Erfindung betrifft eine Schaltvorrichtung für ein mehrgängiges Schaltgetriebe eines Fahrzeuges nach der im Oberbegriff von Anspruch 1 näher definierten Art.

Bei Handschaltgetrieben mit zentraler Schaltwelle kommen zur Erzeugung von Wähl- und Schaltkräften verschiedene Bauteile im Getriebe zum Einsatz. Die Bauteile dienen insbesondere dazu, den Fahrzeugführer bei der Führung des Schalthebels in den Schaltgassen entsprechend dem Schaltbild zu unterstützen und gleichzeitig durch die Unterstützung eine Beschädigung von Bauteilen im Getriebe zu vermeiden. Der Fahrzeugführer soll ein Gefühl dafür bekommen, in welcher Schaltgasse er sich mit dem Schalthebel gerade befindet. Besondere Berücksichtigung soll dabei der Übergang in diejenigen Schaltgassen finden, in denen besonders kleine Übersetzungen geschaltet werden oder in denen die Übersetzung für den Rückwärtsgang geschaltet wird. Würde ein zu kleines Übersetzungsverhältnis oder der Rückwärtsgang geschaltet, ohne dass die Fahrzeugbedingungen dies zulassen, insbesondere aufgrund einer zu großen Geschwindigkeit oder der eingeleiteten Fahrtrichtungsumkehr ohne Stillstand des Fahrzeugs, so würden die Schalteinrichtungen und besonders die Synchronisiereinrichtungen Schaden nehmen. Konstruktionsbedingt treten im Zusammenwirken der einzelnen Bauteile Reibverluste auf, die im ungünstigen Fall zu Reduzierungen des Schaltkomforts führen können.

Zur Vermeidung von Schaltvorgängen, die nicht erwünscht sind, muss die Möglichkeit gegeben sein, den mechanischen Schaltvorgang durch die Behinderung oder zumindest Erschwerung der Bewegung der Schaltwelle zu unterbinden. So soll beispielhaft eine Schaltung in einen Rückwärtsgang nicht zulässig sein, wenn das Fahrzeug sich oberhalb einer zulässigen Geschwindigkeit in Vorwärtsrichtung bewegt. Hierzu sind in der Schalteinrichtung Sperren oder Anschläge vorgesehen, die sich nicht, oder nur sehr schwer überwinden lassen wenn der Fahrer versucht, die Schaltposition im Schaltbild des Fahrzeuges zu erreichen, in der der Rückwärtsgang angeordnet ist.

Aus der Fahrzeugtechnik sind Schaltbetätigungsvorrichtungen zum Wählen einer Schaltgasse und Schalten einer Gangstufe bei einem Getriebe, insbesondere einem Handschaltgetriebe, hinreichend bekannt. Um eine gewünschte Schaltgasse zu wählen, kann der Fahrer einen Schalthebel betätigen, der über ein Schaltgestänge mit einer Schaltwelle gekoppelt sein kann. Durch eine Längsbewegung der Schaltwelle kann die gewünschte Schaltgasse gewählt und durch eine entsprechende Drehbewegung der Schaltwelle kann in der gewählten Schaltgasse eine Gangstufe geschaltet werden. Darüber hinaus ist eine Schaltkulisse vorgesehen, welche die Längs- und die Drehbewegungen der Schaltwelle geeignet umsetzt und die Schaltschienen sowie die Schaltmitnehmer zum Schalten einer gewünschten Gangstufe führt.

Eine aus der Fahrzeugtechnik bekannte Schaltsperreinrichtung weist einen federbelasteten Rastierungsbolzen mit einer Anhebesicherung auf. Bei dieser Lösung kann es bei Rückschaltungen vorkommen, dass versehentlich die Schaltgasse des Rückwärtsganges gewählt wird und diese dann unter Abweisgeräuschen der Kupplungsverzahnung versucht wird zu schalten. Beispielsweise können besonders harte Rastierungen bei der Anhebesicherung des Rückwärtsganges verwendet werden, wodurch jedoch das Schalten des Rückwärtsganges auch bei einer gewünschten Schaltung erschwert wird.

In der DE 199 60 194 A1 wird eine Vorrichtung zum Erzeugen von Rückstellkräften oder erhöhten Wählkräften an einer Schaltwelle offenbart. Die Vorrichtung weist ein Führungselement, ein Vorspannelement, einen Anschlag, eine Anschlagscheibe und wenigstens drei Federelemente auf. Durch die Federelemente können für verschiedene Wählpositionen unterschiedliche Wählkräfte bzw. unterschiedliche Rückstellkräfte erzeugt werden. Durch eine derartige Vorrichtung wird der in axialer Richtung der Schaltwelle benötigte Bauraum jedoch entsprechend vergrößert. Des Weiteren besteht die Vorrichtung aus vielen Einzelteilen, welche teilweise aufwendig herzustellen sind, da beispielsweise das Führungselement entsprechende Führungsbahnen aufweisen muss.

Aus der DE 102 51 351 A1 ist eine Schalteinrichtung bekannt, welche eine Schaltwelle, einen Anschlag für eine Bewegung der Schaltwelle in eine Schaltgasse mit einer Rückwärtsgangstufe und eine Anzeigeeinrichtung für die Rückwärtsgangstellung der Schaltwelle umfasst. Es ist ein Rastierelement vorgesehen, das sowohl den Anschlag als auch die Betätigung der Anzeigeeinrichtung ermöglicht. Das Rastierelement umfasst einen Stößel und ein Federelement, welches auf den Stößel wirkt. Die Rastiereinrichtung ist derart angeordnet, dass der Stößel in eine Aussparung der Schaltwelle eingreift. Der Stößel und die Aussparung der Schaltwelle weisen Abschrägungen auf, welche miteinander korrespondieren. Kommt die Abschrägung der Aussparung der Schaltwelle mit der Abschrägung des Stößels in Kontakt, so wird der Anschlag für die Bewegung der Schaltwelle in die Schaltgasse mit der Rückwärtsgangstufe erzeugt.

Schließlich ist aus der GB-A-2 066 909, die die Merkmale des Oberbegriffs des Anspruchs 1 enthält, eine Schaltvorrichtung für ein mehrgängiges Schaltgetriebe, insbesondere ein Zahnräder-Wechselgetriebe eines Kraftfahrzeugs, bekannt geworden, mit einer Schaltwelle, die in einem Gehäuse axial verschiebbar und drehbar angeordnet ist, wobei durch deren axiale Längsbewegung eine Schaltgasse wählbar und durch deren Drehbewegung in der gewählten Schaltgasse eine Gangstufe schaltbar ist, und mit einer Rastiereinrichtung für die Anhebung einer Wählkraft beim Wählen in eine Schaltgasse mit einer Rückwärtsgangstufe.

Beim Wählen in die Schaltgasse mit der Rückwärtsgangstufe wird zwischen zwei Schaltarten unterschieden, nämlich zwischen statischem und dynamischem Wählen.

Bei statischem Wählen in die Schaltgassen mit der Rückwärtsgangstufe liegt die Abschrägung der Aussparung der Schaltwelle bereits vor dem Wählen in die Schaltgasse mit der Rückwärtsgangstufe an der Abschrägung des Stößels an. Der Fahrzeugführer übt über den Schalthebel eine Kraft auf die Schaltwelle aus, wodurch die zwischen Stößel und Schaltwelle wirkende Haftreibung überwunden und die Schaltwelle in Richtung der Schaltgasse mit der Rückwärtsgangstufe bewegt wird. Der Stößel wird hierbei gegen das Federelement der Rastiereinrichtung gedrückt. Bei statischem Wählen in die Schaltgasse mit der Rückwärtsgangstufe wirken somit große Reibungskräfte (Haftreibung) und es ist daher eine große Wählkraft notwendig.

Bei dynamischem Wählen in die Schaltgasse mit der Rückwärtsgangstufe liegt die Abschrägung der Aussparung der Schaltwelle vor dem Wählen in die Schaltgasse mit der Rückwärtsgangstufe noch nicht an der Abschrägung des Stößels an. Der Fahrzeugführer übt über den Schalthebel eine Kraft auf die Schaltwelle aus, wodurch diese in Richtung der Schaltgasse mit der Rückwärtsgangstufe bewegt wird. Hierbei trifft die Abschrägung der Aussparung der Schaltwelle unter Bewegung auf die Abschrägung des Stößels, wodurch der Stößel gegen das Federelement der Rastiereinrichtung gedrückt wird. Treffen die Abschrägungen der Aussparung der Schaltwelle und des Stößels unter Bewegung aufeinander, so ist eine deutlich kleinere Kraft zur Überwindung des Anschlags notwendig, weil die hierbei auftretende Gleitreibung zwischen der Schaltwelle und dem Stößel deutlich kleiner ist als die Haftreibung bei statischem Wählen in die Schaltgasse mit der Rückwärtsgangstufe. Somit ist bei dynamischem Wählen in die Schaltgasse mit der Rückwärtsgangstufe eine deutlich kleinere Wählkraft notwendig, als bei statischem Wählen in die Schaltgasse mit der Rückwärtsgangstufe.

Ein Nachteil einer solchen Vorrichtung ist, dass der Unterschied der benötigten Wählkraft bei statischem und dynamischem Wählen in die Schaltgasse mit der Rückwärtsgangstufe ziemlich groß ist, was sich negativ auf den Wählkomfort auswirkt.

Der vorliegenden Erfindung liegt die Aufgabe zugrunde, eine Schaltvorrichtung für ein Schaltgetriebe anzugeben, durch die die Nachteile des Standes der Technik beseitigt bzw. verringert werden. Mit der Schaltvorrichtung soll ein Wählen in eine Schaltgasse mit einer Rückwärtsgangstufe vom Fahrzeugführer deutlich spürbar sein und der Unterschied der benötigten Wählkraft bei statischem und dynamischem Wählen in die Schaltgasse mit der Rückwärtsgangstufe soll deutlich verringert werden.

Die der Erfindung zugrunde liegende Aufgabe wird durch eine, auch die kennzeichnenden Merkmale des Hauptanspruchs aufweisende, gattungsgemäße Schaltvorrichtung gelöst.

Die erfindungsgemäße Schaltvorrichtung für ein mehrgängiges Schaltgetriebe, insbesondere ein manuell betätigtes Zahnräder-Wechselgetriebe eines Kraftfahrzeugs, umfasst eine Schaltwelle, die in einem Gehäuse, beispielsweise in einem Schaltgehäuse bzw. Getriebegehäuse, axial verschiebbar und verdrehbar angeordnet ist. Durch eine axiale Längsbewegung der Schaltwelle ist eine Schaltgasse wählbar und durch eine Drehbewegung der Schaltwelle ist in der gewählten Schaltgasse eine Gangstufe schaltbar. Des Weiteren umfasst die Schaltvorrichtung eine Rastiereinrichtung für eine Anhebung der Wählkraft beim Wählen in eine Schaltgasse mit einer Rückwärtsgangstufe und eine Federanordnung. Die Rastiereinrichtung weist einen Stößel, ein Federelement und eine Verschlussschraube auf und ist derart im Gehäuse angeordnet, dass der Stößel in eine Aussparung der Schaltwelle eingreift. Der Stößel ist im Gehäuse radial zur Schaltwelle verschiebbar angeordnet und wird durch das Federelement gegen eine Anlagefläche im Gehäuse gedrückt. Der Stößel weist an der in die Aussparung der Schaltwelle eingreifende Spitze Abschrägungen auf. Ebenso weist die Aussparung der Schaltwelle Abschrägungen auf, die mit den Abschrägungen des Stößels korrespondieren. Kommt die Abschrägung der Aussparung der Schaltwelle mit der Abschrägung des Stößels in Kontakt, so wird ein Anschlag für die Bewegung der Schaltwelle in die Schaltgasse mit der Rückwärtsgangstufe erzeugt, welcher nur mit einem erhöhten Kraftaufwand überdrückt werden kann. Die Federanordnung umfasst wenigstens ein erstes Federelement, ein zweites Federelement und ein Anschlagelement, welches beispielsweise als Buchse ausgebildet sein kann. Das erste Federelement, das zweite Federelement und die Buchse sind konzentrisch an der Schaltwelle angeordnet und in axialer Richtung durch Anschlagelemente entsprechend abstützbar. Das erste Federelement weist eine kleine Federkonstante auf, während das zweite Federelement eine große Federkonstante aufweist. Die Widerstandskraft der Federanordnung ist ziemlich konstant und kann mittels der Federkenndaten sehr genau bestimmt werden.

In nicht betätigtem Zustand des Schalthebels wirkt das erste Federelement mit geringer Kraft derart auf die Schaltwelle ein, dass die Schaltwelle bzw. der Schalthebel in einer Ausgangsstellung positioniert wird. Um von dieser Ausgangsstellung in eine Schaltgasse mit zwei Vorwärtsgangstufen zu Wählen, muss der Fahrzeugführer den Schalthebel und somit die Schaltwelle gegen die Federkraft des ersten Federelementes und gewisse Reibungskräfte innerhalb der Schaltvorrichtung bewegen. Beim Wählen in eine Schaltgasse mit zwei Vorwärtsgangstufen wirkt somit im Wesentlichen das erste Federelement der Federanordnung auf die Schaltwelle ein, wodurch eine entsprechende Leichtgängigkeit beim Wählen in eine Schaltgasse mit zwei Vorwärtsgangstufen realisiert wird.

Erst beim Wählen in die Schaltgasse mit der Rückwärtsgangstufe wirkt das zweite Federelement der Federanordnung mit der Rastiereinrichtung zusammen. Somit muss beim Wählen in die Schaltgasse mit der Rückwärtsgangstufe im Wesentlichen der Anschlag, welcher durch die Rastiereinrichtung und die Aussparung der Schaltwelle erzeugt wird, und die Federkraft des zweiten Federelements der Federanordnung mit entsprechend großer Kraft überwunden werden.

Ist die Schaltgasse mit der Rückwärtsgangstufe erreicht, kann durch eine Drehung der Schaltwelle die Rückwärtsgangstufe bzw. eine Crawler-Gangstufe geschaltet werden, wobei unter anderem das zweite Federelement komprimiert ist und die Spitze des Stößels der Rastiereinrichtung auf der Oberfläche der Schaltwelle gleitet. Durch die auftretende Reibung zwischen dem Stößel und der Oberfläche der Schaltwelle wird unter anderem die Rückstellkraft des zweiten Federelements beim Wählen aus der Schaltgasse mit der Rückwärtsgangstufe gehemmt, da die Reibungskraft der Rückstellkraft der Federanordnung entgegenwirkt. Somit ist die Rückstellkraft aus der Schaltgasse mit der Rückwärtsgangstufe etwas gemindert und dem Fahrzeugführer wird beim Wählen aus der Schaltgasse mit der Rückwärtsgangstufe ein besseres Wählverhalten vemittelt.

Durch die erfindungsgemäße Schaltvorrichtung wird der Wählkomfort deutlich verbessert, da der Unterschied der benötigten Wählkraft bei statischem und dynamischem Wählen in die Schaltgasse mit der Rückwärtsgangstufe deutlich verringert wird, wobei beim Wählen in eine Schaltgasse mit zwei Vorwärtsgangstufen eine Leichtgängigkeit der Schaltvorrichtung gewährleistet ist. Dem Fahrzeugführer wird deutlich signalisiert, dass er in Begriff ist, in die Schaltgasse mit der Rückwärtsgangstufe zu wählen.

Im Folgenden wird das Grundprinzip der Erfindung an Hand einer Zeichnung beispielhaft näher erläutert.

Es zeigen:
- Fig. 1: ein typisches Schaltbild eines manuell betätigten Zahnräder-Wechselgetriebes mit drei Schaltgassen,
- Fig. 2: die erfindungsgemäße Schaltvorrichtung für ein Getriebe mit drei Schaltgassen in der Ausgangsstellung,
- Fig. 3: die erfindungsgemäße Schaltvorrichtung für ein Getriebe mit drei Schaltgassen in der Schaltgasse 1/2,
- Fig. 4: die erfindungsgemäße Schaltvorrichtung für ein Getriebe mit drei Schaltgassen in der Schaltgasse mit der Rückwärtsgangstufe,
- Fig. 5: ein typisches Schaltbild eines manuell betätigten Zahnräder-Wechselgetriebes mit vier Schaltgassen,
- Fig. 6: die erfindungsgemäße Schaltvorrichtung für ein Getriebe mit vier Schaltgassen in der Ausgangsstellung und
- Fig. 7: die erfindungsgemäße Schaltvorrichtung für ein Getriebe mit vier Schaltgassen in der Schaltgasse mit der Rückwärtsgangstufe.

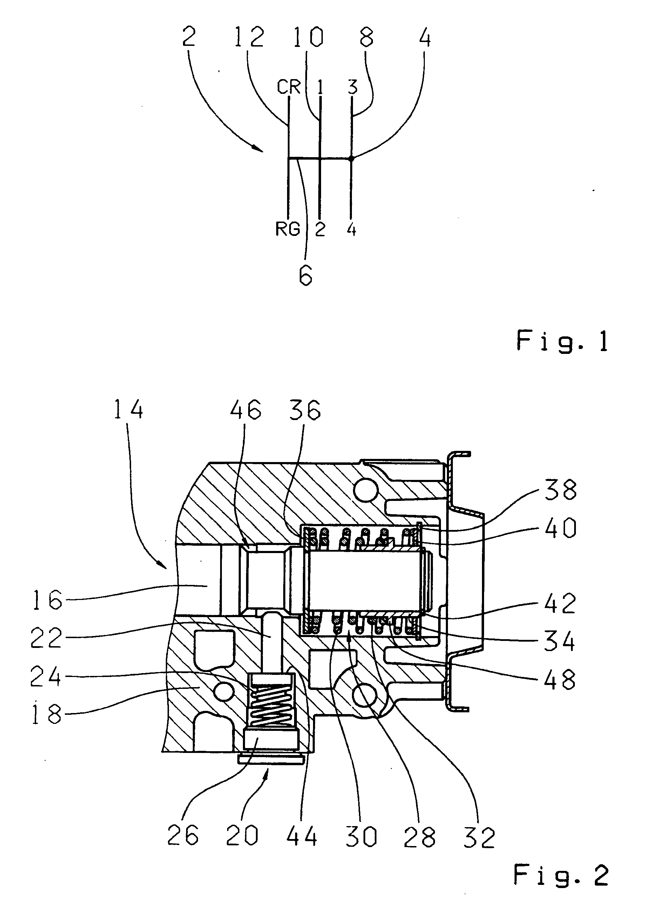

In der Fig. 1 ist ein typisches Schaltbild 2 für ein manuell betätigtes Zahnräder-Wechselgetriebe mit drei Schaltgassen dargestellt. Der Schalthebel des Getriebes liegt üblicherweise in seiner Ruhelage an der Position 4 in der Schaltgasse 8, in der die Schalthebelpositionen für die dritte und für die vierte Gangstufe erreicht werden. In der Schaltgasse 10 sind die Positionen des Schalthebels für die erste und für die zweite Gangstufe angeordnet, und in der Schaltgasse 12 ist die Position des Schalthebels für die Rückwärtsgangstufe und gegebenenfalls für eine Crawler-Gangstufe angeordnet. Um aus der Ruhelageposition 4 in der Schaltgasse 8 in eine der anderen Schaltgassen 10, 12 zu wechseln, muss der Fahrzeugführer den Schalthebel in der Quergasse 6 nach links bewegen. Dieser Vorgang wird als Wählen bezeichnet, während die Bewegung innerhalb einer der Schaltgassen 8, 10, 12 in die eine oder andere der beiden jeweiligen Schalthebelpositionen als Schalten bezeichnet wird. Wählt der Fahrzeugführer von der Schaltgasse 8 in eine andere Schaltgasse 10, 12, so muss er den Schalthebel in der Quergasse 6 gegen einen Widerstand bewegen, damit er erkennt, dass er die Schaltgasse 8 verlassen will. Die Bewegung in die Schaltgasse 10 lässt sich dabei gegen einen verhältnismäßig geringen Widerstand durchführen, während der Bewegung in die Schaltgasse 12 ein größerer Widerstand entgegengesetzt wird.

Die Fig. 2 zeigt die erfindungsgemäße Schaltvorrichtung 14 für ein hier nicht beschriebenes Getriebe mit drei Schaltgassen. Die Schaltvorrichtung 14 ist in einem Gehäuse 18 angeordnet, beispielsweise einem Schalt- bzw. Getriebegehäuse, und umfasst eine Schaltwelle 16, eine Rastiereinrichtung 20 und eine Federanordnung 28. Die Schaltwelle 16 ist im Gehäuse 18 axial verschiebbar und verdrehbar angeordnet, wobei durch deren axiale Längsbewegung eine Schaltgasse wählbar und durch deren Drehbewegung in der gewählten Schaltgasse eine Gangstufe schaltbar ist. Die Rastiereinrichtung 20 weist einen Stößel 22, ein Federelement 24 und eine Verschlussschraube 26 auf. Die Rastiereinrichtung 20 ist derart im Gehäuse 18 angeordnet, dass der Stößel 22 in eine Aussparung 46 der Schaltwelle 16 eingreift. Der Stößel 22 und die Aussparung 46 der Schaltwelle 16 weisen Abschrägungen auf, welche miteinander korrespondieren. Die Federanordnung umfasst ein erstes Federelement 30, ein zweites Federelement 32 und ein Anschlagelement 34, welches hier als Buchse ausgebildet ist. Das erste Federelement 30, das zweite Federelement 32 und die Buchse 34 sind konzentrisch an der Schaltwelle 16 angeordnet und in axialer Richtung durch Anschlagelemente 36, 38, 40, 42 abgestützt. In der Fig. 2 ist die erfindungsgemäße Schaltvorrichtung 14 in ihrer Ausgangsstellung dargestellt, also in der Schaltgasse mit der dritten und der vierten Gangstufe. Das erste Federelement 30 drückt hier mit geringer Kraft die Schaltwelle 16 in der Zeichenblattebene nach links gegen einen hier nicht gezeigten Anschlag. Die Buchse 34 ist auf der Schaltwelle 16 axial verschiebbar angeordnet und weist einen Anschlag 48 auf, welcher beispielsweise einteilig mit der Buchse ausgebildet oder durch eine Anschlagscheibe oder einen Sicherungsring realisierbar ist. Über das zweite Federelement 32 und den Sicherungsring 42 ist die Buchse 34 auf der Schaltwelle 16 entsprechend stark vorgespannt. Die Buchse 34 unterläuft mit Ihrem kleineren Durchmesser das Anschlagelement 40 und ist somit in dieser Schaltgasse nicht wirksam. Der Stößel 22 ist im Gehäuse 18 radial zur Schaltwelle 16 verschiebbar angeordnet und wird mittels des Federelements 24 gegen eine Anlagefläche 44 im Gehäuse 18 gedrückt. Die Schaltwelle 16 berührt er hierbei nicht.

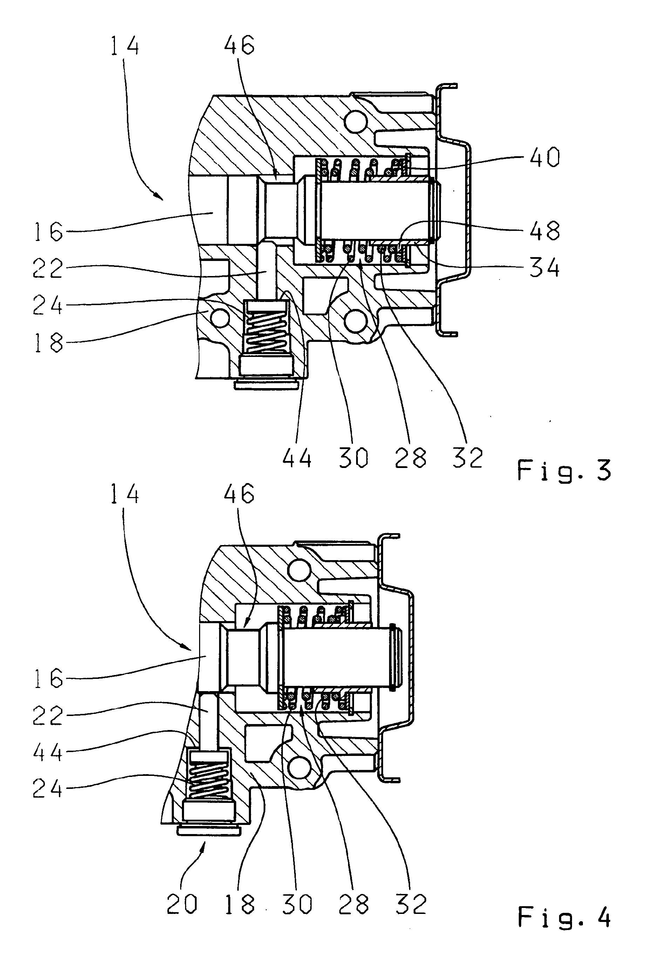

In der Fig. 3 ist die erfindungsgemäße Schaltvorrichtung 14 in der Schaltgasse mit der ersten und der zweiten Gangstufe dargestellt. Ausgehend von der Fig. 2 wird die Schaltwelle 16 in der Zeichenblattebene nach rechts bewegt, bis die Schaltgasse mit der ersten und der zweiten Gangstufe erreicht wird. Hierfür ist mit geringer Kraft gegen das erste Federelement 30 zu drücken. In dieser Position liegt der Stößel 22 mit seiner Abschrägung an der Abschrägung der Aussparung 46 der Schaltwelle 16 an. Durch die Kraft des Federelements 24 wirkt der Stößel 22 der Rastiereinrichtung 20 in Verbindung mit der Schaltwelle 16 als Anschlag. Der Stößel 22 liegt weiterhin an der Anlagefläche 44 am Gehäuse 18 an. Die Buchse 34 liegt mit ihrem Anschlag 48 am Anschlagelement 40 an. Bis jetzt tritt das zweite Federelement 32 der Federanordnung 28 noch nicht in Aktion.

In der Fig. 4 ist die erfindungsgemäße Schaltvorrichtung 14 in der Schaltgasse mit der Rückwärtsgangstufe dargestellt. Die beim Wählen von der Schaltgasse mit der ersten und der zweiten Gangstufe in die Schaltgasse mit der Rückwärtsgangstufe erforderliche Wählkraft steigt zunächst an, ohne dass ein Weg zurückgelegt wird, da die Kraft des zweiten Federelements 32 überdrückt und der federbelastete Stößel 22 über die Abschrägung der Aussparung 46 der Schaltwelle 16 angehoben werden muss. Durch das Aufeinandertreffen der Abschrägungen wird der axialen Bewegung der Schaltwelle 16 ein Widerstand entgegengesetzt, wodurch ein Anschlag gegen ein unbeabsichtigtes Wählen in die Schaltgasse mit der Rückwärtsgangstufe gebildet wird. Erst wenn der Widerstand absichtlich überwunden wird und die Abschrägungen aneinander entlang gleiten, kann der Schalthebel in die Richtung der Schaltgasse mit der Rückwärtsgangstufe verschoben werden. Somit ist also beim Wählen in die Schaltgasse mit der Rückwärtsgangstufe eine Überwindung von im Wesentlichen zwei Widerständen notwendig, um die Schaltwelle 16 in der Zeichenblattebene weiter nach rechts zu verschieben. Der Stößel 22 wird gegen die Federkraft des Federelements 24 gedrückt und verlässt somit die Anlagefläche 44 am Gehäuse 18. Beide Federelemente 30, 32 der Federanordnung 28 werden entsprechend komprimiert und bewirken mit der Rastiereinrichtung 20 eine Kraftanhebung beim Wählen in die Schaltgasse mit der Rückwärtsgangstufe, was für einen Fahrzeugführer deutlich spürbar ist. In der Fig. 4 ist die Schaltgasse mit der Rückwärtsgangstufe erreicht, aber die Rückwärtsgangstufe ist noch nicht eingelegt. Bisher wurde die Schaltwelle 16 lediglich axial in der Quergasse verschoben. Erst indem die Schaltwelle 16 durch den Schalthebel gedreht wird, wird die Rückwärtsgangstufe bzw. eine Crawler-Gangstufe eingelegt. Bei der Drehung gleitet die Spitze des Stößels 22 auf der Oberfläche der Schaltwelle 16.

Die vorangegangene Beschreibung der erfindungsgemäßen Schaltvorrichtung 14 für ein Getriebe mit drei Schaltgassen kann entsprechend auch für ein Gruppengetriebe mit beispielsweise überlagerter H-Schaltung angewandt werden.

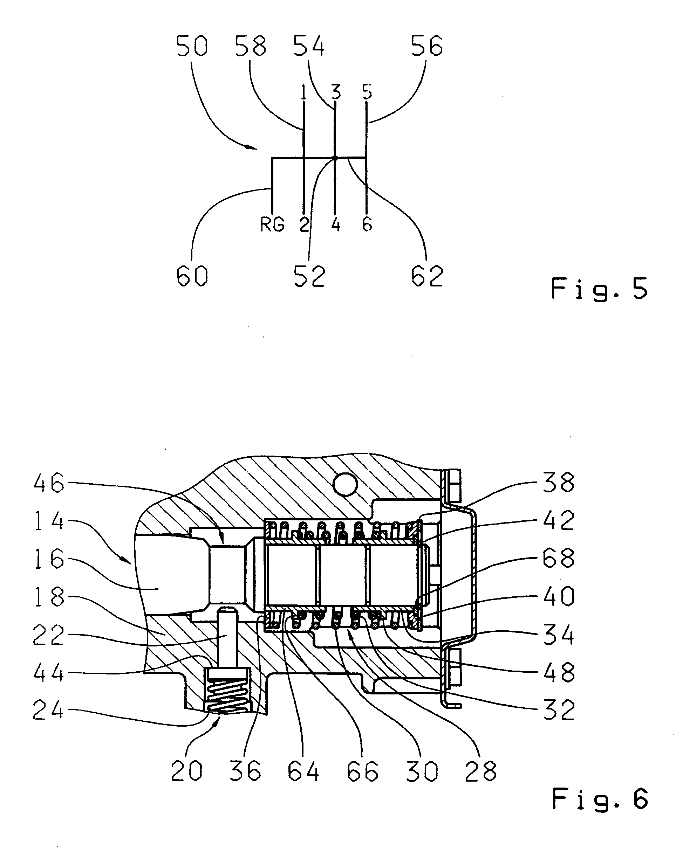

In der Fig. 5 ist ein typisches Schaltbild 50 für ein manuell betätigtes Zahnräder-Wechselgetriebe mit sechs Vorwärtsgangstufen und einer Rückwärtsgangstufe dargestellt. Der Schalthebel des Getriebes liegt üblicherweise in seiner Ruhelage an der Position 52 in der Schaltgasse 54, in der die Schalthebelpositionen für die dritte und für die vierte Gangstufe erreicht werden. In der Schaltgasse 60 ist die Position des Schalthebels für die Rückwärtsgangstufe angeordnet. In der Schaltgasse 58 sind die Positionen des Schalthebels für die erste und für die zweite Gangstufe angeordnet, während in der Schaltgasse 56 die Schalthebelpositionen für die fünfte und für die sechste Gangstufe erreicht werden. Um aus der Ruhelageposition 52 in der Schaltgasse 54 in eine der anderen Schaltgassen 56, 58, 60 zu wechseln, muss der Fahrzeugführer den Schalthebel in der Quergasse 62 nach links oder rechts bewegen. Dieser Vorgang wird als Wählen bezeichnet, während die Bewegung innerhalb einer der Schaltgassen 54, 56, 58, 60 in die eine oder andere der beiden jeweiligen Schalthebelpositionen als Schalten bezeichnet wird. Wählt der Fahrzeugführer von der Schaltgasse 54 in eine andere Schaltgasse 56, 58, 60, so muss er den Schalthebel in der Quergasse 62 gegen einen Widerstand bewegen, wodurch er erkennt, dass er die Schaltgasse 54 verlassen will. Die Bewegung in die Schaltgassen 56 und 58 lässt sich dabei gegen einen verhältnismäßig geringen Widerstand durchführen, während der Bewegung in die Schaltgasse 60 ein größerer Widerstand entgegengesetzt wird.

Die Fig. 6 zeigt die erfindungsgemäße Schaltvorrichtung 14 für ein Getriebe mit vier Schaltgassen. Die Funktionsweise der Schaltvorrichtung 14 ist sinngemäß dieselbe, wie die bereits beschriebene Funktionsweise bei einem Getriebe mit drei Schaltgassen. Auch hier umfasst die Schaltvorrichtung 14 eine Schaltwelle 16, eine Rastiereinrichtung 20 und eine Federanordnung 28. Die Rastiereinrichtung 20 und deren Funktion sind identisch zur Beschreibung der Schaltvorrichtung 14 für ein Getriebe mit drei Schaltgassen. Die Federanordnung wird um eine zweite Buchse 64 und ein weiteres Anschlagelement 68 erweitert und umfasst hier somit wenigstens ein erstes Federelement 30, ein zweites Federelement 32 und zwei Anschlagelemente 34, 64, welche hier als Buchsen ausgebildet sind. Das erste Federelement 30, das zweite Federelement 32 und die Buchsen 34, 64 sind konzentrisch an der Schaltwelle 16 angeordnet und in axialer Richtung durch Anschlagelemente 36, 38, 40, 42, 68 abstützbar. Beide Buchsen 34, 64 sind auf der Schaltwelle 16 axial verschiebbar angeordnet. In der Fig. 6 ist die erfindungsgemäße Schaltvorrichtung 14 in ihrer Ausgangsstellung dargestellt, also in der Schaltgasse mit der dritten und der vierten Gangstufe. Durch das erste Federelement 30 wird hier die Schaltwelle 16 mit geringer Kraft derart gehalten, dass sich der Stößel 22 mittig in der Aussparung 46 der Schaltwelle 16 befindet. Die Buchsen 34, 64 weisen jeweils einen Anschlag 48, 66 auf, zwischen denen das zweite Federelement 32 angeordnet ist. Der Anschlag 48, 66 kann beispielsweise einteilig mit der Buchse 34, 64 ausgebildet sein oder durch eine Anschlagscheibe oder einen Sichrungsring realisiert werden. Das zweite Federelement 32 ist dabei entsprechend vorgespannt, wodurch die Buchse 64 an einem Anschlag an der Schaltwelle 16 und die Buchse 34 am Anschlagelement 68 anliegt. Die Buchse 34 unterläuft mit ihrem kleineren Durchmesser das Anschlagelement 40 und die Buchse 64 unterläuft mit ihrem kleineren Durchmesser das Anschlagelement 36. Das zweite Federelement 32 ist in dieser Position nicht wirksam. Der Stößel 22 wird mittels des Federelements 24 gegen die Anlagefläche 44 im Gehäuse 18 gedrückt. Die Schaltwelle 16 berührt er hierbei nicht.

Wird die Schaltgasse mit der fünften und sechsten Gangstufe gewählt, so wird die Schaltwelle 16 in der Zeichenblattebene nach links verschoben. Hierfür ist mit geringer Kraft gegen das erste Federelement 30 zu drücken, was sich durch eine geringe Wählkraft bemerkbar macht.

Wird die Schaltgasse mit der ersten und zweiten Gangstufe gewählt, so wird die Schaltwelle in der Zeichenblattebene nach rechts verschoben. Hierfür ist ebenso mit geringer Kraft gegen das erste Federelement 30 zu drücken. In dieser Position liegt der Stößel 22 mit seiner Abschrägung an der Abschrägung der Aussparung 46 der Schaltwelle 16 an. Durch die Kraft des Federelements 24 wirkt der Stößel 22 in Verbindung mit der Abschrägung der Aussparung 46 der Schaltwelle 16 als Anschlag. Der Stößel 22 liegt weiterhin an der Anlagefläche 44 am Gehäuse 18 an und die Buchse 34 liegt mit ihrem Anschlag 48 an dem Anschlagelement 40 an. In der Schaltgasse mit der ersten und zweiten Gangstufe tritt das zweite Federelement 32 noch nicht in Aktion.

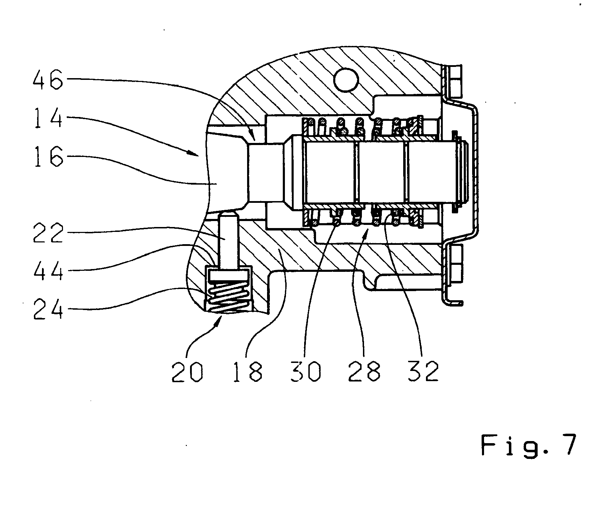

In der Fig. 7 ist die erfindungsgemäße Schaltvorrichtung 14 in der Schaltgasse mit der Rückwärtsgangstufe dargestellt. Die beim Wählen von der Schaltgasse mit der ersten und der zweiten Gangstufe in die Schaltgasse mit der Rückwärtsgangstufe erforderliche Wählkraft steigt zunächst an, ohne dass ein Weg zurückgelegt wird, da die Kraft des zweiten Federelements 32 überdrückt und der federbelastete Stößel 22 über die Abschrägung der Aussparung 46 der Schaltwelle 16 angehoben werden muss. Somit ist also beim Wählen in die Schaltgasse mit der Rückwärtsgangstufe eine Überwindung von im Wesentlichen zwei Widerständen notwendig, um die Schaltwelle 16 in der Zeichenblattebene weiter nach rechts zu verschieben. Der Stößel 22 wird dementsprechend gegen die Federkraft des Federelements 24 gedrückt und verlässt somit die Anlagefläche 44 am Gehäuse 18. Beide Federelemente 30, 32 der Federanordnung 28 werden entsprechend komprimiert und wirken mit der Rastiereinrichtung 20 als Signal für die Kraftanhebung beim Wählen in die Schaltgasse mit der Rückwärtsgangstufe.

Bei der erfindungsgemäßen Schaltvorrichtung 14, wie in Fig. 1 bis Fig. 7 beschrieben, kann durch eine entsprechende Ausgestaltung der Schaltwelle 16 im Bereich der Abschrägungen der Aussparung 46 die benötigte Wählkraft zum Wählen in die Schaltgasse mit der Rückwärtsgangstufe entsprechend beeinflusst werden. Es sind auch andere konstruktive Ausführungsformen denkbar, bei denen beispielsweise die Anschlagelemente 36, 38, 40, 42, 68 anders angeordnet und die Buchsen 34, 64 anders ausgebildet sind. Ebenso können die Federkenndaten der Federelemente 24, 30, 32 entsprechend auf die konstruktive Ausführungsform angepasst werden. Beispielsweise sind die Federelemente 24, 30, 32 als Schraubenfedern ausgebildet. Die Anschlagelemente 36, 38, 40, 42, 68 können beispielweise durch Anschlagscheiben bzw. Sicherungsringe realisiert werden.

Durch die erfindungsgemäße Schaltvorrichtung 14 wird dem Fahrzeugführer deutlich signalisiert, dass er in Begriff ist, in die Schaltgasse mit der Rückwärtsgangstufe zu wählen. Durch das Zusammenwirken der Rastiereinrichtung 20 mit dem zweiten Federelement 32 der Federanordnung 28 kann der Unterschied der benötigten Wählkraft bei statischem und dynamischem Wählen in die Schaltgasse für den Rückwärtsgang deutlich verringert werden, wodurch der Wählkomfort entscheidend verbessert wird.

### Bezugszeichen

- 2: Schaltbild
- 4: Ruhelageposition
- 6: Quergasse
- 8: Schaltgasse
- 10: Schaltgasse
- 12: Schaltgasse
- 14: Schaltvorrichtung
- 16: Schaltwelle
- 18: Gehäuse, Schalt- bzw. Getriebegehäuse
- 20: Rastiereinrichtung
- 22: Stößel
- 24: Federelement
- 26: Verschlussschraube
- 28: Federanordnung
- 30: erstes Federelement
- 32: zweites Federelement
- 34: Anschlagelement, Buchse
- 36: Anschlagelement
- 38: Anschlagelement
- 40: Anschlagelement
- 42: Anschlagelement
- 44: Anlagefläche
- 46: Aussparung
- 48: Anschlag
- 50: Schaltbild
- 52: Ruhelageposition
- 54: Schaltgasse
- 56: Schaltgasse
- 58: Schaltgasse
- 60: Schaltgasse
- 62: Quergasse
- 64: Anschlagelement, Buchse
- 66: Anschlag
- 68: Anschlagelement

## Patentansprüche

1. Schaltvorrichtung (14) für ein mehrgängiges Schaltgetriebe, insbesondere ein Zahnräder-Wechselgetriebe eines Kraftfahrzeugs, mit einer Schaltwelle (16), die in einem Gehäuse (18) axial verschiebbar und verdrehbar angeordnet ist, wobei durch deren axiale Längsbewegung eine Schaltgasse wählbar und durch deren Drehbewegung in der gewählten Schaltgasse eine Gangstufe schaltbar ist, und mit einer Rastiereinrichtung (20) für eine Anhebung einer Wählkraft beim Wählen in eine Schaltgasse mit einer Rückwärtsgangstufe, wobei die Schaltvorrichtung (14) eine Federanordnung (28) umfasst, welche wenigstens ein erstes Federelement (30), ein zweites Federelement (32) und ein Anschlagelement (34) aufweist, **dadurch gekennzeichnet**, dasss das erste Federelement (30) im Wesentlichen beim Wählen in eine Schaltgasse mit zwei Vorwärtsgangstufen wirkt und das zweite Federelement (32) beim Wählen in die Schaltgasse mit der Rückwärtsgangstufe mit der Rastiereinrichtung (20) zusammenwirkt.

2. Schaltvorrichtung (14) nach Anspruch 1, **dadurch gekennzeichnet, dass** die Rastiereinrichtung (20) einen Stößel (22), ein Federelement (24) und eine Verschlussschraube (26) umfasst.

3. Schaltvorrichtung (14) nach Anspruch 1 oder 2, **dadurch gekennzeichnet, dass** die Rastiereinrichtung (20) derart im Gehäuse (18) angeordnet ist, dass ein Stößel (22) In eine Aussparung (46) der Schaltwelle (16) eingreift.

4. Schaltvorrichtung (14) nach Anspruch 2 oder 3, **dadurch gekennzeichnet, dass** der Stößel (22) an der in die Aussparung (46) der Schaltwelle (16) eingreifenden Spitze Abschrägungen aufweist, die mit Abschrägungen der Aussparung (46) der Schaltwelle (16) korrespondieren.

5. Schaltvorrichtung (14) nach Anspruch 1, **dadurch gekennzeichnet, dass** das erste Federelement (30), das zweite Federelement (32) und das Anschlagelement (34) konzentrisch an der Schaltwelle (16) angeordnet und in axialer Richtung durch weitere Anschlagelemente (36, 38, 40, 42, 68) abstützbar sind.

6. Schaltvorrichtung (14) nach Anspruch 1 oder 5, **dadurch gekennzeichnet, dass** das Anschlagelement (34) axial verschiebbar auf der Schaltwelle (16) angeordnet ist und einen Anschlag (48, 66) aufweist.

7. Schaltvorrichtung (14) nach wenigstens einem der vorangegangenen Ansprüche, **dadurch gekennzeichnet, dass** das Anschlagelement (34) als Buchse ausgebildet ist.

8. Schaltvorrichtung (14) nach wenigstens einem der vorangegangenen Ansprüche, **dadurch gekennzeichnet, dass** das Gehäuse (18) als Schalt- bzw. Getriebegehäuse ausgebildet ist.

9. Verfahren zur Anhebung einer Wählkraft beim Wählen in eine Schaltgasse mit einer Rückwärtsgangstufe eines mehrgängigen Schaltgetriebes, mit einer Schaltwelle (16), die in einem Gehäuse (18) axial verschiebbar und verdrehbar angeordnet ist, wobei durch deren axiale Längsbewegung eine Schaltgasse wählbar und durch deren Drehbewegung in der gewählten Schaltgasse eine Gangstufe geschaltet wird, und mit einer Rastiereinrichtung (20), **dadurch gekennzeichnet, dass** ein erstes Federelement (30) einer Federanordnung (28) im Wesentlichen beim Wählen in eine Schaltgasse mit zwei Vorwärtsgangstufen wirkt und die Anhebung der Wählkraft beim Wählen in die Schaltgasse mit der Rückwärtsgangstufe durch ein Zusammenwirken der Rastiereinrichtung (20) mit einem zweiten Federelement (32) der Federanordnung (28) realisiert wird.

## Claims

1. Shifting device (14) for a multi-gear manual transmission, in particular a gear wheel change speed transmission of a motor vehicle, with a shift shaft (16) which is arranged axially displaceably and rotatably in a housing (18), wherein, as a result of its axial longitudinal movement, a shift lane can be selected and, as a result of its rotational movement in the selected shift lane, a gear stage can be shifted, and with a latching device (20) for a raising of a selection force during selection into a shift lane with a reverse gear stage, wherein the shifting device (14) comprises a spring arrangement (28) which has at least one first spring element (30), a second spring element (32) and a stop element (34), **characterized in that** the first spring element (30) acts substantially during selection into a shift lane with two forward gear stages and the second spring element (32) interacts with the latching device (20) during selection into the shift lane with the reverse gear stage.

2. Shifting device (14) according to Claim 1, **characterized in that** the latching device (20) comprises a tappet (22), a spring element (24) and a locking screw (26).

3. Shifting device (14) according to Claim 1 or 2, **characterized in that** the latching device (20) is arranged in the housing (18) in such a manner that a tappet (22) engages in a recess (46) of the shift shaft (16).

4. Shifting device (14) according to Claim 2 or 3, **characterized in that** the tappet (22) has chamfers at the tip which engages in the recess (46) of the shift shaft (16), which chamfers correspond with chamfers of the recess (46) of the shift shaft (16).

5. Shifting device (14) according to Claim 1, **characterized in that** the first spring element (30), the second spring element (32) and the stop element (34) are arranged concentrically on the shift shaft (16) and can be supported in the axial direction by further stop elements (36, 38, 40, 42, 68).

6. Shifting device (14) according to Claim 1 or 5, **characterized in that** the stop element (34) is arranged axially displaceably on the shift shaft (16) and has a stop (48, 66).

7. Shifting device (14) according to at least one of the preceding claims, **characterized in that** the stop element (34) is formed as a sleeve.

8. Shifting device (14) according to at least one of the preceding claims, **characterized in that** the housing (18) is formed as a shift or transmission housing.

9. Method of raising a selection force during selection into a shift lane with a reverse gear stage of a multi-gear manual transmission, with a shift shaft (16) which is arranged axially displaceably and rotatably in a housing (18), wherein, as a result of its axial longitudinal movement, a shift lane can be selected and, as a result of its rotational movement in the selected shift lane, a gear stage can be shifted, and with a latching device (20), **characterized in that** a first spring element (30) of a spring arrangement (28) acts substantially during selection into a shift lane with two forward gears and the raising of the selection force during selection into the shift lane with the reverse gear stage is realized by an interaction of the latching device (20) with a second spring element (32) of the spring arrangement (28).

## Revendications

1. Dispositif de changement de vitesse (14) pour une boîte de vitesses à plusieurs rapports, en particulier une boîte de vitesses à engrenages d'un véhicule automobile, comprenant un arbre de changement de vitesse (16) qui est disposé de manière à pouvoir tourner et coulisser axialement dans un boîtier (18), une voie de changement de vitesse pouvant être sélectionnée par son mouvement longitudinal axial et un rapport de vitesse pouvant être commuté par son mouvement de rotation dans la voie de changement de vitesse sélectionnée, et comprenant un dispositif d'encliquetage (20) pour augmenter une force de sélection dans le cas d'une sélection dans une voie de changement de vitesse avec un rapport de vitesse de marche arrière, le dispositif de changement de vitesse (14) comprenant un agencement de ressort (28) qui présente au moins un premier élément de ressort (30), un deuxième élément de ressort (32) et un élément de butée (34), **caractérisé en ce que** le premier élément de ressort (30) agit essentiellement lors de la sélection dans une voie de changement de vitesse avec deux rapports de vitesse de marche avant et le deuxième élément de ressort (32) coopère avec le dispositif d'encliquetage (20) lors de la sélection dans la voie de changement de vitesse avec le rapport de vitesse de marche arrière.

2. Dispositif de changement de vitesse (14) selon la revendication 1, **caractérisé en ce que** le dispositif d'encliquetage (20) comprend une tige-poussoir (22), un élément de ressort (24) et une vis de fermeture (26).

3. Dispositif de changement de vitesse (14) selon la revendication 1 ou 2, **caractérisé en ce que** le dispositif d'encliquetage (20) est disposé dans le boîtier (18) de telle sorte qu'une tige-poussoir (22) vienne en prise dans un évidement (46) de l'arbre de changement de vitesse (16).

4. Dispositif de changement de vitesse (14) selon la revendication 2 ou 3, **caractérisé en ce que** la tige-poussoir (22) présente des biseautages sur la pointe s'engageant dans l'évidement (46) de l'arbre de changement de vitesse (16), lesquels correspondent aux biseautages de l'évidement (46) de l'arbre de changement de vitesse (16).

5. Dispositif de changement de vitesse (14) selon la revendication 1, **caractérisé en ce que** le premier élément de ressort (30), le deuxième élément de ressort (32) et l'élément de butée (34) sont disposés concentriquement sur l'arbre de changement de vitesse (16) et peuvent être supportés dans la direction axiale par d'autres éléments de butée (36, 38, 40, 42, 68).

6. Dispositif de changement de vitesse (14) selon la revendication 1 ou 5, **caractérisé en ce que** l'élément de butée (34) est disposé de manière déplaçable axialement sur l'arbre de changement de vitesse (16) et présente une butée (48, 66).

7. Dispositif de changement de vitesse (14) selon au moins l'une quelconque des revendications précédentes, **caractérisé en ce que** l'élément de butée (34) est réalisé sous forme de douille.

8. Dispositif de changement de vitesse (14) selon au moins l'une quelconque des revendications précédentes, **caractérisé en ce que** le boîtier (18) est réalisé sous forme de boîtier de changement de vitesse ou de boîtier de boîte de vitesses.

9. Procédé pour augmenter une force de sélection lors de la sélection dans une voie de changement de vitesse avec un rapport de vitesse de marche arrière d'une boîte de vitesses à plusieurs rapports, comprenant un arbre de changement de vitesse (16) qui est disposé de manière à pouvoir tourner et coulisser axialement dans un boîtier (18), une voie de changement de vitesse pouvant être sélectionnée par son mouvement longitudinal axial et un rapport de vitesse pouvant être commuté par son mouvement de rotation dans la voie de changement de vitesse sélectionnée, et comprenant un dispositif d'encliquetage (20), **caractérisé en ce qu'**un premier élément de ressort (30) d'un agencement de ressort (28) agit essentiellement lors de la sélection dans une voie de changement de vitesse avec deux rapports de vitesse de marche avant et l'augmentation de la force de sélection est réalisée lors de la sélection dans la voie de changement de vitesse avec le rapport de vitesse de marche arrière par coopération du dispositif d'encliquetage (20) avec un deuxième élément de ressort (32) de l'agencement de ressort (28).
